# EUROPÄISCHE PATENTSCHRIFT

(11) **EP 0 957 342 B1**
(45) Veröffentlichungstag und Bekanntmachung des Hinweises auf die Patenterteilung: **29.06.2005**
(21) Anmeldenummer: 99107795.9
(22) Anmeldetag: 20.04.1999
(51) Int. Cl.: G01C 21/20

(54) **Kraftfahrzeugnavigationssystem mit Zielpunktlesevorrichtung**
Vehicle navigation system with target point reading device
Système de navigation pour un véhicule avec dispositif de lecture de destination

(30) Priorität: 13.05.1998 DE 19821352
(43) Veröffentlichungstag der Anmeldung: 17.11.1999
(73) Patentinhaber: Siemens Aktiengesellschaft, 80333 München (DE)
(72) Erfinder: Tiede, Lutz, 64832 Babenhausen (DE); Lippert, Günter, 61267 Neu Anspach (DE)

(56) Entgegenhaltungen:
- EP-A- 0 773 525
- PATENT ABSTRACTS OF JAPAN vol. 098, no. 001, 30. Januar 1998 (1998-01-30) & JP 09 244529 A (N T T CHUBU TELECON KK), 19. September 1997 (1997-09-19)

## Beschreibung

Die Erfindung betrifft ein Kraftfahrzeugnavigationssystem bei dem mindestens ein Zielpunkt in ein in einem Kraftfahrzeug angeordnetes Navigationsgerät eingebbar ist.

Bei bekannten Kraftfahrzeugnavigationsgeräten müssen der Zielpunkt oder die Zielpunkte, zu denen der Benutzer von dem Kraftfahrzeugnavigationssystem geführt werden möchte, über eine Tastatur in das im Kraftfahrzeug eingebaute Navigationsgerät eingegeben werden. Da die Tastatur infolge des geringen zur Verfügung stehenden Raumes nur wenige Bedienelemente aufweist, ist die Eingabe von Zielpunkten entsprechend aufwendig und zeitraubend.

Die Benutzer des Navigationssystems lassen während der Eingabe zumeist den Motor des Kraftfahrzeuges laufen, um die Heizung oder die Klimaanlage des Kraftfahrzeuges betreiben zu können. Deshalb wird neben der Eingabezeit auch zusätzlich Kraftstoff verbraucht und es entstehen zusätzliche Emissionen.

Aus Patent Abstracts of Japan, vol. 098, no. 001 & JP 09 244 529 A ist ein Kraftfahrzeugnavigationssystem bekannt, das eine Lesevorrichtung in Form eines Diskettenlaufwerks einhält. Die Lesevorrichtung liest Zielpunkte von einer Diskette. Die ausgelesenen Zielpunkte werden auf einem Bildschirm angezeigt.

Auch aus der EP 0 773 525 A ist ein Navigationssystem bekannt, bei dem eine Informationsspeichereinheit als CD-ROM, IC-Karte oder Diskette ausgebildet sein kann. Zielorte werden jedoch über eine Eingabeeinheit eingegeben.

Aufgabe der Erfindung ist es daher, ein Kraftfahrzeugnavigationssystem anzugeben, bei dem die Eingabe der Zielorte in das im Kraftfahrzeug angeordneten Navigationsgeräts einfach und schnell erfolgen kann und Daten des Navigationssystems außerhalb des Navigationssystems genutzt werden können. Diese Aufgabe wird durch ein erfindungsgemäßes Kraftfahrzeugnavigationssystem mit den Merkmalen des Anspruchs 1 gelöst.

Das erfindungsgemäße Kraftfahrzeugnavigationssystem hat den Vorteil, dass wieder beschreibbare Datenträger preiswert erhältlich und leicht zu transportieren sind.

Bei einem Verfahren zur Nutzung des Navigationssystems wird ein wieder beschreibbarer Datenträger außerhalb eines Kraftfahrzeuges mit dem oder den Zielpunkten beschrieben. Anschließend wird der wieder beschreibbare Datenträger in ein im Kraftfahrzeug angeordnetes Lesegerät eingeführt oder mit einem solchen Lesegerät verbunden. Dann werden der Zielpunkt oder die Zielpunkte aus dem wieder beschreibbaren Datenträger ausgelesen und schließlich als Zielpunkte in das Kraftfahrzeugnavigationsgerät eingelesen.

Bei dem Navigationssystem werden als wieder beschreibbarer Datenträger Speicherchips in Form von Speicherchipkarten verwendet, da diese unempfindlich gegen Feuchtigkeit und mechanische Beanspruchungen sind und ihre Abmessungen sehr klein sind, so dass sie bequem vom Benutzer vom Nutzer des Kraftfahrzeugnavigationssystems mit sich geführt werden können. Weiterhin kann durch die geringe Größe das Lesegerät klein gehalten werden und es ist kein mechanischer Antrieb des Lesegerätes erforderlich. Bei Verwendung von Disketten als wiederbeschreibbarer Datenträger ist es vorteilhaft, daß Diskettenlaufwerke standardmäßig in Personalcomputer eingebaut sind, so daß hierbei keine zusätzlichen Hardwarekosten außerhalb des Kraftfahrzeuges anfallen.

Durch die Auswählbarkeit der Zielpunkte aus einer Datenbank wird der Arbeitsaufwand weiter verringert, da die Zielpunkte nur ausgewählt und nicht selbst vollständig über eine Tastatur eingeben werden müssen.

Wenn die Datenbank oder die Datenbanken, aus denen die Zielpunkte gelesen werden, in einem Personalcomputer oder Rechnernetzwerk eingerichtet sind, ist bei vorhandenen Geräten kein zusätzlicher Aufwand außerhalb des Kraftfahrzeuges für das Kraftfahrzeugnavigationssystem erforderlich.

Dadurch, daß das Kraftfahrzeugnavigationsgerät ein Schreibgerät zum Beschreiben der wiederbeschreibbaren Datenträger aufweist, oder mit einem solchen Schreibgerät verbunden ist, können die Daten, die mit dem Kraftfahrzeugnavigationsgerät ermittelt werden, auch außerhalb des Gerätes, z. B. einem Personalcomputer zur Pflege, z. B. von Kundendaten genutzt werden.

Durch die Ausgestaltung des Schreibgerätes gleichzeitig als Lesegerät für die wiederbeschreibbaren Datenträger wird eine insgesamt kompakt und preiswerte Anordnung erreicht.

Dadurch, daß eine Eingabe des Startpunktes mittels einer Ortung des Kraftfahrzeugsstandpunktes durchführbar ist, kann die Eingabe des Startpunktes automatisch und sehr genau erfolgen.

Die Verwendung eines GPS-Empfängers zur Ortung stellt eine preiswerte und zuverlässige Ortungsmöglichkeit dar.

Durch eine Übernahme des zuletzt gespeicherten Kraftfahrzeugstandortes kann auf eine erneute Ortung oder sonstige Eingabe des Kraftfahrzeugstandortes verzichtet werden, wenn das Kraftfahrzeug zwischen des Kraftfahrzeugstandortes und der neuen Eingabe nicht fortbewegt wurde.

Durch Eingabe des Standortes mittels des wiederbeschreibbaren Datenträgers oder mittels einer Tastatur ist auch eine Route berechenbar, deren Standort nicht mit dem gegenwärtigen Standort des Kraftfahrzeuges übereinstimmt.

Die Erfindung wird nachfolgend anhand der Figuren näher beschrieben.

Es zeigen:
- Fig. 1:: eine mögliche Ausgestaltung eines erfindungsgemäßen Kraftfahrzeugnavigationsgerätes,
- Fig. 2:: eine weitere mögliche Ausgestaltung eines erfindungsgemäßen Kraftfahrzeugnavigationsgerätes,
- Fig. 3:: einen Personalcomputer mit einer Schreibeinrichtung für eine Speicherchipkarte,
- Fig. 4:: ein mögliches Ablaufdiagramm des erfindungsgemäßen Navigationsverfahrens.

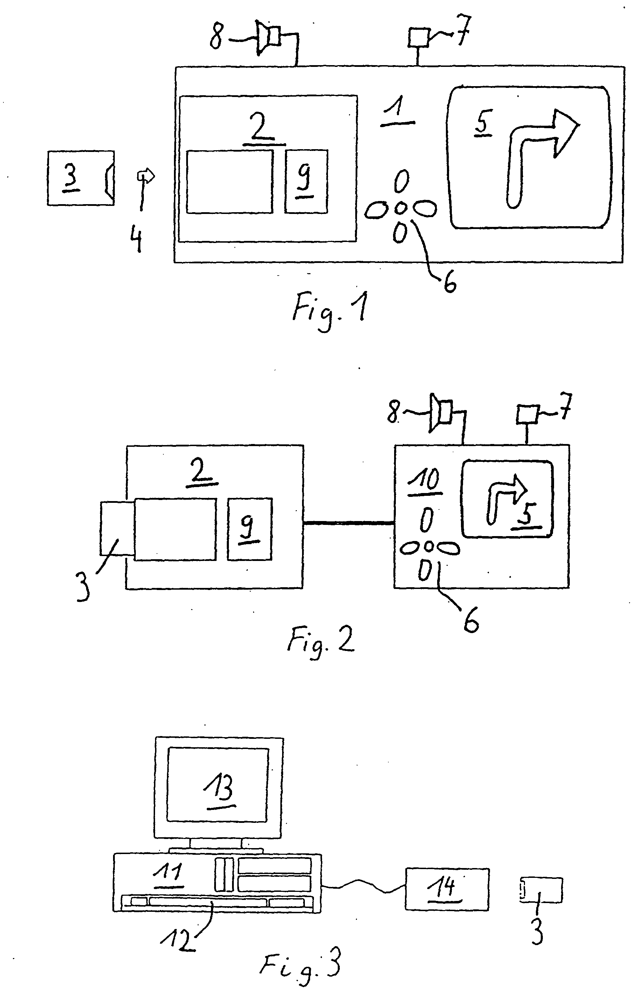

In Figur 1 weist das Kraftfahrzeugnavigationsgerät 1 eine Lesevorrichtung 2 für wiederbeschreibbare Datenträger in Form von Speicherchipkarten 3 auf, die in die Lesevorrichtung 2 einschiebbar sind, was durch den Pfeil 4 angedeutet ist. Das Kraftfahrzeugnavigationsgerät 1 weist weiterhin ein Display 5 und eine Tastatur 6 auf und ist mit einer GPS-Antenne 7 verbunden. Auf dem Display 5 kann angezeigt werden, wohin der Fahrer das Kraftfahrzeug steuern soll. Über die Tastatur 6 kann das Kraftfahrzeugnavigationsgerät bedient werden. So kann beispielweise eine bestimmte Anzeigeart oder ein Bedienmenü für das Display 5 gewählt werden oder es können zusätzliche Features, wie z. B. ein Hotelführer oder die Anzeige bestimmter Infrastrukturen ausgewählt werden.

Das Kraftfahrzeugnavigationsgerät 1 kann mittels der mit ihm verbundenen GPS-Antenne den aktuellen Standort des Kraftfahrzeuges orten, in das das Kraftfahrzeugnavigationsgerät 1 eingebaut ist. Akustische Leitinformationen können über einen Lautsprecher 8, der mit dem Kraftfahrzeugnavigationsgerät 1 verbunden ist, an den Benutzer des Kraftfahrzeugnavigationssystemes ausgegeben werden. In dem Kartenlesegerät 2 ist eine Ausleseelektronik 9 angeordnet, die die Lesbarkeit der Speicherchipkarte 3 für das Kraftfahrzeugnavigationsgerät 1 gewährleistet. Sofern die Lesevorrichtung 2 auch als Schreibvorrichtung für die wiederbeschreibbare Datenträger in Form von Speicherchipkarten 3 ausgeführt ist, können auch dann Daten die im Kraftfahrzeugnavigationsgerät 1 während einer Fahrt gesammelt wurden oder über die Tastatur 6 eingegeben wurden, auf der Speicherchipkarte 3 gespeichert werden.

In Figur 2 unterscheidet sich das Kraftfahrzeugnavigationsgerät 10 von dem in Figur 1 dargestellten Kraftfahrzeugnavigationsgerät 1 nur dadurch, daß es nicht das Lesegerät 2 enthält, sondern mit dem Lesegerät 2 verbunden ist. So kann der benötigte Raumbedarf für das Kraftfahrzeugnavigationsgerät 10 reduziert werden, was besonders bei Verwendung von Disketten als wiederbeschreibbaren Datenträger vorteilhaft ist. Die in Figur 2 das Lesegerät 2 eingeschobenen Speicherchipkarte 3 kann z. B. in der Ausführung einer Multimediacard der Fa. Siemens eine Größe von 32 x 24 x 1,4 mm³ aufweisen, so daß der Raumbedarf für ein Lesegerät einer solchen Speicherchipkarte gering ist.

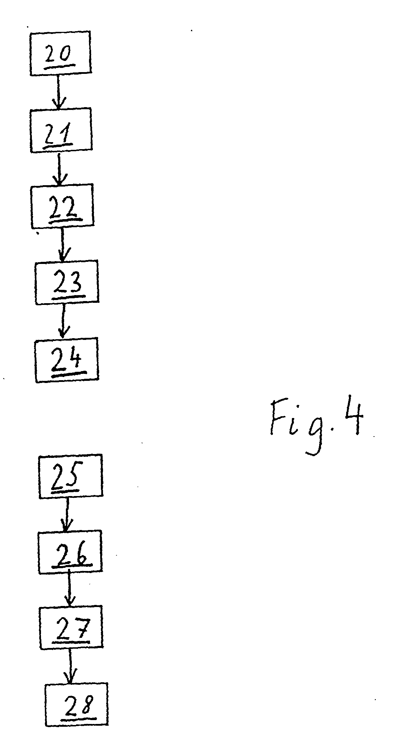

In Figur 3 ist ein aus dem Stand der Technik bekannter Personalcomputer 11 mit Tastatur 12 und Monitor 13 mit einem Schreibgerät 14 für wiederbeschreibbare Datenträger in Form von Speicherchipkarten 3 dargestellt. So kann die Speicherchipkarte 3 über die Tastatur 12 mit den in das Kraftfahrzeugnavigationsgerät 1, 10 einzugebenden Zielpunkte beschrieben werden. Noch einfacher ist das Beschreiben, wenn die Zielpunkte aus einer im Personalcomputer 11 vorhandenen Datenbank ausgewählt und dann auf die Speicherchipkarte 3 geschrieben werden. Wenn das Lesegerät 3, das im Kraftfahrzeugnavigationsgerät 1 enthalten oder mit dem Kraftfahrzeugnavigationsgerät 10 verbunden ist, gleichzeitig als Schreibgerät und das Schreibgerät 14, das gleichzeitig als Lesegerät ausgeführt ist, ist es möglich, die mit dem Kraftfahrzeugnavigationsgerät 1, 10 während der Fahrt erhaltenen Daten oder die mittels der Tastatur 6 eingegebenen Daten auf die Speicherchipkarte 3 zu schreiben und in den Personalcomputer 11 einzulesen, um z. B. eine im Personalcomputer vorhandene Datenbank zu ergänzen.

In Figur 4 ist eine mögliche Ausgestaltung des erfindungsgemäßen Verfahrens dargestellt. In Schritt 20 werden Kundendaten aus einer Datenbank gelesen, und in Schritt 21 auf die Speicherchipkarte geschrieben, wobei die Kundendaten auch die geographischen Orte der Kunden enthalten. Die Speicherchipkarte 3 wird aus dem Schreibgerät entnommen (Schritt 22) und in Schritt 23 in das Lesegerät 2 im Kraftfahrzeug eingeführt. Dort werden in Schritt 24 die geographischen Orte der Kunden aus dem Speicherchip ausgelesen und als Zielorte in das Navigationsgerät 1, 10 eingelesen. Dies kann automatisch nach Einführen der Speicherchipkarte 3 ausgeführt werden oder durch ein bestimmtes Betätigen der Tastatur 6. Ebenso können vorzugsweise nach Beendigung einer Fahrt in Schritt 25 Daten aus dem Kraftfahrzeugnavigationsgerät 1, 10 ausgelesen und auf die Speicherchipkarte 3 eingelesen werden. In Schritt 26 wird die Speicherchipkarte 3 entnommen und in das mit dem Personalcomputer 11 verbundene Lesegerät eingeführt. In Schritt 28 können die auf der Speicherchipkarte enthaltenen Daten ausgelesen und in den Personalcomputer eingelesen werden, wo sie z. B. eine Datenbank modifizieren können.

## Patentansprüche

1. Kraftfahrzeugnavigationssystem mit einem in einem Kraftfahrzeug angeordneten Navigationsgerät, wobei in das Kraftfahrzeugnavigationssystem ein oder mehrere Zielpunkte eingebbar sind und das Navigationsgerät (1, 10) eine Lesevorrichtung (2) aufweist oder mit einer Lesevorrichtung (2) verbunden ist, mit welcher der Zielpunkt oder die Zielpunkte aus einem wieder beschreibbaren Datenträger (3) auslesbar und in das Kraftfahrzeugnavigationsgerät (1, 10) als Zielpunkt einlesbar sind, und der wieder beschreibbare Datenträger (3) zum Auslesen der Zielpunkte in das Lesegerät (2) einführbar oder mit dem Lesegerät (2) verbindbar ist, **dadurch gekennzeichnet, dass** der wieder beschreibbare Datenträger als Speicherchipkarte (3) ausgestaltet ist und das Kraftfahrzeugnavigationsgerät (1, 10) ein Schreibgerät zum Beschreiben der wieder beschreibbaren Datenträger aufweist oder mit einem solchen Schreibgerät verbunden ist.

2. Kraftfahrzeugnavigationssystem nach einem der vorstehenden Ansprüche, **dadurch gekennzeichnet, dass** der oder die Zielpunkte aus einer Datenbank auswählbar und auf den wieder beschreibbaren Datenträger beschreibbar sind.

3. Kraftfahrzeugnavigationssystem nach Anspruch 2, **dadurch gekennzeichnet, dass** die Datenbank in einem Personalcomputer (11) eingerichtet ist.

4. Kraftfahrzeugnavigationssystem nach einem der vorhergehenden Ansprüche, **dadurch gekennzeichnet, dass** das Schreibgerät auch als Lesegerät (2) ausgebildet ist.

5. Kraftfahrzeugnavigationssystem nach einem der vorhergehenden Ansprüche, **dadurch gekennzeichnet, dass** mit dem Schreibgerät Daten aus dem Kraftfahrzeugnavigationsgerät (1, 10) auf den wieder beschreibbaren Datenträger (3) schreibbar sind.

6. Kraftfahrzeugnavigationssystem nach einem der vorstehenden Ansprüche, **dadurch gekennzeichnet, dass** der Startpunkt durch eine Ortung des Kraftfahrzeugstandpunktes und Eingabe des entsprechend erhaltenen Punktes eingebbar ist.

7. Kraftfahrzeugnavigationssystem nach Anspruch 6, **dadurch gekennzeichnet, dass** es ein Ortungsgerät zur Ortung des Kraftfahrzeugstandpunktes aufweist.

8. Kraftfahrzeugnavigationssystem nach Anspruch 7, **dadurch gekennzeichnet, dass** das Ortungsgerät ein GPS-Empfänger ist.

9. Kraftfahrzeugnavigationssystem nach einem der vorstehenden Ansprüche, **dadurch gekennzeichnet, dass** der Startort durch eine Übernahme des zuletzt gespeicherten Kraftfahrzeugstandortes eingebbar ist.

10. Kraftfahrzeugnavigationssystem nach einem der vorstehenden Ansprüche, **dadurch gekennzeichnet, dass** der Startort mittels des wieder beschreibbaren Datenträgers eingebbar ist.

11. Kraftfahrzeugnavigationssystem nach einem der vorstehenden Ansprüche, **dadurch gekennzeichnet, dass** der Startort über eine Tastatur eingebbar ist.

## Claims

1. Motor vehicle navigation system having a navigation instrument arranged in a motor vehicle, with one or more destinations being able to be input into the motor vehicle navigation system, and the navigation instrument (1, 10) having a reading apparatus (2) or being connected to a reading apparatus (2) which can be used to read the destination or the destinations from a rewritable data storage medium (3) and to read them into the motor vehicle navigation instrument (1, 10) as destination, and the rewritable data storage medium (3) being able to be inserted into the reader (2) or being able to be connected to the reader (2) for the purpose of reading the destinations, **characterized in that** the rewritable data storage medium is in the form of a memory chip card (3), and the motor vehicle navigation instrument (1, 10) has a writer for writing information to the rewritable data storage medium or is connected to a writer of this type.

2. Motor vehicle navigation system according to one of the preceding claims, **characterized in that** the destination(s) can be selected from a database and can be written to the rewritable data storage medium.

3. Motor vehicle navigation system according to Claim 2, **characterized in that** the database has been set up in a personal computer (11).

4. Motor vehicle navigation system according to one of the preceding claims, **characterized in that** the writer is also in the form of a reader (2).

5. Motor vehicle navigation system according to one of the preceding claims, **characterized in that** the writer can be used to write data from the motor vehicle navigation instrument (1, 10) to the rewritable data storage medium (3).

6. Motor vehicle navigation system according to one of the preceding claims, **characterized in that** the starting point can be input by finding the position of the motor vehicle location and inputting the correspondingly obtained point.

7. Motor vehicle navigation system according to Claim 6, **characterized in that** it has a position-finding instrument for finding the position of the motor vehicle location.

8. Motor vehicle navigation system according to Claim 7, **characterized in that** the position-finding instrument is a GPS receiver.

9. Motor vehicle navigation system according to one of the preceding claims, **characterized in that** the starting place can be input by accepting the last motor vehicle location stored.

10. Motor vehicle navigation system according to one of the preceding claims, **characterized in that** the starting place can be input using the rewritable data storage medium.

11. Motor vehicle navigation system according to one of the preceding claims, **characterized in that** the starting place can be input using a keypad.

## Revendications

1. Système de navigation pour véhicules automobiles comportant un appareil de navigation monté dans un véhicule automobile, un ou plusieurs points de destination pouvant être saisis dans le système de navigation pour véhicules automobiles et l'appareil de navigation (1, 10) comportant un dispositif de lecture (2) ou étant relié à un dispositif de lecture (2), avec lequel le point de destination ou les points de destination peuvent être lus en sortie sur un support de données (3) réinscriptible et être chargés comme points de destination dans l'appareil de navigation (1, 10) pour véhicule automobile et le support de données (3) réinscriptible pouvant être, pour y lire les points de destination, introduit dans l'appareil de lecture (2) ou être raccordé à l'appareil de lecture (2), **caractérisé par le fait que** le support de données réinscriptible est conçu comme carte (3) à puce mémoire et que l'appareil de navigation (1, 10) pour véhicule automobile comporte un appareil à écriture permettant de charger le support de données réinscriptible ou est relié à un tel appareil à écriture.

2. Système de navigation pour véhicules automobiles selon l'une des revendications précédentes **caractérisé par le fait que** le ou les points de destination peuvent être sélectionnés dans une banque de données et être inscrits sur le support de données réinscriptible.

3. Système de navigation pour véhicules automobiles selon la revendication 2 **caractérisé par le fait que** la banque de données est installée dans un ordinateur personnel (11).

4. Système de navigation pour véhicules automobiles selon l'une des revendications précédentes **caractérisé par le fait que** l'appareil à écriture est également conçu comme appareil de lecture (2).

5. Système de navigation pour véhicules automobiles selon l'une des revendications précédentes **caractérisé par le fait que**, avec l'appareil à écriture, des données provenant de l'appareil de navigation (1, 10) pour véhicule automobile peuvent être inscrites sur le support de données (3) réinscriptible.

6. Système de navigation pour véhicules automobiles selon l'une des revendications précédentes **caractérisé par le fait que** le point de départ peut être saisi par repérage de l'emplacement du véhicule automobile et saisie du point obtenu en conséquence.

7. Système de navigation pour véhicules automobiles selon la revendication 6 **caractérisé par le fait qu'**il comporte un appareil de repérage pour le repérage de l'emplacement du véhicule automobile.

8. Système de navigation pour véhicules automobiles selon la revendication 7 **caractérisé par le fait que** l'appareil de repérage est un récepteur GPS.

9. Système de navigation pour véhicules automobiles selon l'une des revendications précédentes **caractérisé par le fait que** le point de départ peut être saisi par prise en compte de l'emplacement du véhicule automobile mémorisé en dernier lieu.

10. Système de navigation pour véhicules automobiles selon l'une des revendications précédentes **caractérisé par le fait que** le point de départ peut être saisi au moyen du support de données réinscriptible.

11. Système de navigation pour véhicules automobiles selon l'une des revendications précédentes **caractérisé par le fait que** le point de départ peut être saisi par l'intermédiaire d'un clavier.
